# EUROPEAN PATENT SPECIFICATION

(11) **EP 1 234 761 B1**
(45) Date of publication and mention of the grant of the patent: **06.09.2006**
(21) Application number: 02004139.8
(22) Date of filing: 25.02.2002
(51) Int. Cl.: B62M 7/12

(54) **Wheel motor**
Radnabenmotoreinheit
Ensemble de moteur monté dans une roue

(30) Priority: 26.02.2001 JP 2001050464; 26.02.2001 JP 2001050379; 26.02.2001 JP 2001050538
(43) Date of publication of application: 28.08.2002
(73) Proprietor: YAMAHA HATSUDOKI KABUSHIKI KAISHA, Iwata-shi, Shizuoka-ken (JP)
(72) Inventor: Terada, Junji, Iwata-shi, Shizuoka-ken (JP)
(74) Representative: Grünecker, Kinkeldey, Stockmair & Schwanhäusser Anwaltssozietät

(56) References cited:
- EP-A- 0 980 821
- EP-A- 1 088 752
- WO-A-92/21554
- US-A- 5 691 584
- PATENT ABSTRACTS OF JAPAN vol. 0165, no. 03 (M-1326), 16 October 1992 (1992-10-16) & JP 4 185207 A (AISIN AW CO LTD), 2 July 1992 (1992-07-02)

## Description

The present invention relates to a wheel motor according to the preamble portion of claim 1, such as disclosed by closest prior art document US 5 691 584.

Particularly, it refers to a gear shift device, a braking device and an inverter arrangement in a wheel motor as indicated above.

A wheel motor comprising an electric motor incorporated inside a wheel has been used as a driving power source for a motor vehicle such as a motorcycle or a motor carriage. This wheel motor is arranged such that a rotor with magnets, for example, is mounted on an output shaft inside a wheel, and facing the rotor magnets and surrounding the rotor is secured a stator with coils.

In such a wheel motor for a motor vehicle, a gear shift device having multi-speed gear shift positions is provided to drive the motor efficiently in response to high torque during low speed running and high speed rotation during high speed running.

Heretofore, such a gear shift device has been arranged such that it is provided outside the wheel or disposed adjacent to the motor within the wheel, depending on differences in space and configuration of the wheel between vehicles.

However, the conventional gear shift device is difficult to accommodate compactly in a small space within a wheel, resulting in a large-sized construction as well as limitation to arrangement of other components.

As a braking device for a motor vehicle with a wheel motor as indicated above, the following types of devices are possible:
Type 1 in which a disc is attached to the wheel to form a disc brake, and
Type 2 in which a brake drum or brake disc is fixed to the motor shaft.

However, in the braking device of type 1, the disc is held by arms to be supported on both sides for structural reasons, resulting in a complicated construction as well as an increased weight.

In the braking device of type 2, since the braking device is fixed to the motor shaft, if the brake is actuated, the braking force is exerted directly on the motor, and the brake load is also exerted constantly on the power transmission mechanism connected to the motor shaft, causing increased deterioration over time.

A wheel motor as indicated above is normally provided with an electric power controlling inverter formed of FETs for switching power supply to the coils. The inverter is arranged such that switching elements such as FETs are mounted on a substrate, and charging capacitors, a current detecting sensor, etc, are also provided, power supply cables for sending/receiving signals between controllers such as CPUs, etc, being connected to terminals on the substrate.

Such an inverter is preferably assembled in the wheel together with the motor for simplified wiring of cables as well as a compact configuration of the vehicle.

However, in association with switching action of the inverter, elements such as FETs develop heat and the motor itself also develops heat from its coils. Therefore, if the motor and the inverter are disposed in close proximity within the same wheel for a compact configuration, they develop a lot of heat without adequate cooling function, which might have a bad influence on the reliability of operation.

In view of the above, it is an objective of the present invention to improve a wheel motor as indicated above such that it is adapted to be assembled compactly in a wheel together with a motor.

This objective is solved by a wheel motor, in particular for two-wheeled vehicles, comprising a wheel mounted on an output shaft, a rotor disposed inside the wheel and having a hollow shaft section through which the output shaft passes, and a stator having coils facing the rotor, and a gear shift device having a multi-speed reduction gear mechanism, wherein the multi-speed reduction gear mechanism comprises at least two reduction gear means of different reduction gear ratios, said reduction gear means of different reduction gear ratios being respectively disposed on the output shaft at both sides of said rotor.

In this arrangement, a hollow rotational shaft of the rotor is mounted on the output shaft, and at both sides of the hollow shaft are mounted reduction gear means of different reduction gear ratios, respectively. Therefore, a reduction gear means on the wheel side (final output side) and another reduction gear means on the opposite side are connected to each other on the same axis through the output shaft passing through the hollow shaft section of the rotor, so that rotation of the rotor can be transmitted efficiently to the wheel from either of the reduction gear means, and the reduction gear means can be assembled compactly in the wheel together with a motor.

It is preferable if said rotor has a cylindrical shape, and one of the reduction gear means is disposed inside the cylinder section of said rotor.

In this arrangement, on the outside circumferential surface of the cylinder section of the rotor are secured magnets, and in a space inside the cylinder section can be disposed a reduction gear means, effecting a compact configuration both in the axial and radial directions.

According to a preferred embodiment of the wheel motor, said multi-speed reduction gear mechanism is a planetary mechanism having at least a first reduction gear means and a second reduction gear means, wherein the first reduction gear means of a smaller reduction gear ratio is mounted at the outer side of the rotor, and the second reduction gear means of a larger reduction gear ratio is mounted inside the cylinder section of said rotor.

Within this preferred embodiment, it is beneficial if a ring gear of said first reduction gear means is provided with a one-way clutch; and a ring gear of said second reduction gear means is provided with shift means for causing the ring gear to be fixed and to rotate idly.

Accordingly, it is beneficial if said multi-speed reduction gear mechanism is provided with a planetary mechanism, having at least two reduction gear means of different reduction gear ratios of a first reduction gear means and a second reduction gear means; the first reduction gear means of a smaller reduction gear ratio is mounted at the outer side of the rotor, and the second reduction gear means of a larger reduction gear ratio inside the cylinder section of said rotor; a ring gear of said first reduction gear means is provided with a one-way clutch; and a ring gear of said second reduction gear means is provided with shift means for causing the ring gear to be fixed and to rotate idly.

In this arrangement, the first reduction gear means of a small reduction gear ratio (thus, the diameter of the ring gear of the planetary mechanism is large) is disposed at the outer side of the cylinder section of the rotor, and the second reduction gear means of a large reduction gear ratio (thus, the diameter of the ring gear is small) inside the cylinder section of the rotor, so that the multi-speed reduction gear mechanisms can be assembled efficiently without space loss. In addition, shift means causes, at its low speed shift position, the ring gear of the high speed second reduction gear means to rotate idly to thereby actuate the low speed first reduction gear means, while it causes, at its high speed shift position, the ring gear of the second reduction gear means to be fixed, whereby the motor can be driven at high rotational speed. During operation of the second reduction gear means, the one-way clutch causes the first reduction gear means to rotate idly without operation, thereby providing a smooth shift action with a compact configuration.

According to another preferred embodiment, said shift means comprises a dog clutch adapted to mesh with said ring gear, a slider for moving the dog clutch reciprocally in directions of the output shaft, and a shift cam for driving the slider.

In this arrangement, on the output shaft is mounted a slider, for example, of a cylindrical shape, and the slider is provided with a dog clutch, which is arranged to be engageable with and disengage able from the ring gear of the first reduction gear means, so that gear shift positions can be selected when the shift cam causes the slider to move in the axial directions.

According to yet another preferred arrangement, said stator is provided with a current collector projecting in the axial direction and, preferably, said first reduction gear means is provided radially inwardly of said current collector.

In this arrangement, a coil current controlling current collector projects from the side face of the stator, and in a space formed radially inwardly of the current collector can be disposed the first reduction gear means, effecting a compact configuration.

According to still another preferred embodiment, the wheel motor is provided with a braking device, wherein a brake drum or a brake disc is fixed to an end of the output shaft opposite from said wheel.

In particular in this arrangement, a wheel is fixed to one end of an output shaft, and a hollow rotational shaft of the rotor is mounted on said output shaft. Therefore, a power transmission mechanism on the output shaft at the wheel side (at the final output side) and another power transmission mechanism on the opposite side are connected to each other through the output shaft, and braking means (drum or disc) is fixed to the opposite end of the output shaft from the wheel. As a result, the braking means can be fixed to the output shaft without need of restricting the motor during braking operation, and it can be assembled in a wheel with a compact configuration.

Within this preferred embodiment, it is beneficial if there are selectively disposed on the output shaft at both sides of said rotor reduction gear means of different reduction gear ratios.

In this arrangement, a hollow rotational shaft of the rotor is mounted on the output shaft, as described above, and at both sides of the rotor shaft are mounted reduction gear means of different reduction gear ratios. Therefore, a reduction gear means on the wheel side (final output side) and another reduction gear means on the opposite side are connected to each other on the same axis through the output shaft passing through the hollow shaft section of the rotor, and selective operation of these reduction gear means allow rotation of the rotor to be transmitted efficiently to the wheel from either of the reduction gear means, so that the multi-speed reduction gear mechanisms can be assembled compactly in the wheel together with the braking device.

Within this preferred embodiment, it is preferable if said rotor has a cylindrical shape, and a reduction gear means is disposed inside the cylinder section of said rotor.

In this arrangement, magnets are secured on the outside circumferential surface of the cylinder section of the rotor, and a reduction gear means can be disposed in a space inside the cylinder section, effecting a compact configuration both in the axial and radial directions.

The arrangement of the braking device for the wheel motor as described above, however, is not necessarily linked to the features of the multi-speed reduction gear mechanism as indicated above, but could be combined with any type of wheel motor. Due to this arrangement of the braking device, any type of wheel motor shows a compact configuration and is adapted to be actuated without exerting inappropriate force to the motor and power transmission mechanism.

According to still another preferred embodiment, there is provided an inverter arrangement comprising a motor cover for covering the rotor, the stator, and an electric power controlling inverter with switching elements mounted on a substrate, wherein said motor cover comprises a shaft holding section for holding said output shaft, a disk section adjoining the shaft holding section and perpendicular to said output shaft, and a cylinder section adjoining the disk section, and wherein the substrate is disposed in a region surrounding the shaft holding section of said motor cover.

In particular, in this arrangement, on an output shaft is mounted a motor cover for covering the outer surface of the motor; the motor cover has a shaft holding section for holding the output shaft; the shaft holding section has a certain axial length to hold the output shaft; and within this length and in a region surrounding the shaft holding section is provided, for example, an arc-shaped inverter substrate. Therefore, the inverter is disposed in a space formed between the wheel and the motor cover by the shaft holding section, so that the space inside the wheel is utilized effectively, providing a configuration compact particularly in axial direction.

Within this preferred embodiment, it is beneficial if said substrate is bonded to the disk section of said motor cover.

In this arrangement, the inverter substrate is bonded on the disk surface of the motor cover perpendicular to the output shaft, so that the inverter can be secured in the wheel without any special fixing member, providing a simplified configuration as well as an effective heat radiation function through the motor cover.

It is also beneficial, if there are provided fins formed on the wheel at positions corresponding to said substrate for introducing cooling air into a space inside the wheel by means of rotation of the wheel.

In this arrangement, rotation of the wheel causes cooling winds to be introduced into the space inside the wheel from outside to cool there by the function of fins formed on the wheel, so that the inverter provided on the outside surface of the motor cover can be cooled down effectively.

It is further preferable within this preferred embodiment if said motor cover is provided with a conical tapered section between said disk section and said cylinder section.

In this arrangement, the cylindrical end of the motor cover is formed in the conical shape following the curved surface of the wheel. Therefore, the motor cover can be disposed compact without interference with an air valve of the tire projecting inwardly at the peripheral portion of the wheel, and cooling winds flow from the end face of the motor cover toward the peripheral portion thereof in an expanding manner, so that the inverter and the motor behind the inverter can be effectively cooled down.

Within this preferred embodiment, it is further preferable if a wheel motor of an oil-bath type is formed by said motor cover.

In this arrangement, the motor cover allows the motor to be formed into a sealed structure with oil contained therein, and thus an oil-bath structure is effected in which oil is agitated by the rotor or a reduction gear means to be circulated, so that the inverter mounted on the outside surface of the motor cover can be cooled down through lubricating action by oil as well as its cooling function.

It is yet further beneficial if said substrate is bonded to the disk section on the lower side of said motor cover.

In this arrangement, in the wheel motor of an oil-bath type, the inverter substrate is bonded on the outside surface of the motor cover at its lower portion where oil is collected, so that inverter is subjected to cooling action by oil at all times.

It is also preferred if upwardly of said substrate are disposed electrolytic capacitors, wire cables and a current sensor connected to the inverter.

In this arrangement, in a vacant space above the inverter are disposed electrolytic capacitors, a current sensor and wire cables, thereby providing a compact configuration as a result of effective use of the space.

It is yet also preferred if in the upper part of said motor cover are provided through-holes for said wire cables.

In this arrangement, wire cables pass through the upper part of the motor cover, so that oil collected in the bottom of the oil-bath type motor is prevented from leaking to the outside through cable holes.

The features of the inverter arrangement in a wheel motor as described above, however, are not necessarily linked to the features of the multi-speed reduction gear mechanism and/or the braking device as indicated above, but could be combined with any type of wheel motor. Due to the features of the inverter arrangement, there is provided an inverter arrangement in a wheel capable of effecting a compact configuration within the wheel, and an adequate cooling function.

In the following, the present invention is explained in greater detail with respect to several embodiments thereof in conjunction with the accompanying drawings, wherein:
- Fig. 1: is an external view of a small motor scooter comprising an embodiment of a wheel motor;
- Fig. 2: is a structural view of the embodiment of the wheel motor;
- Fig. 3: is a structural illustration of the embodiment of Fig. 2 as viewed from the side; and
- Fig. 4: is a front view of the motor cover of the embodiment of Fig. 2.

A preferred embodiment will be described below with reference to the drawings.

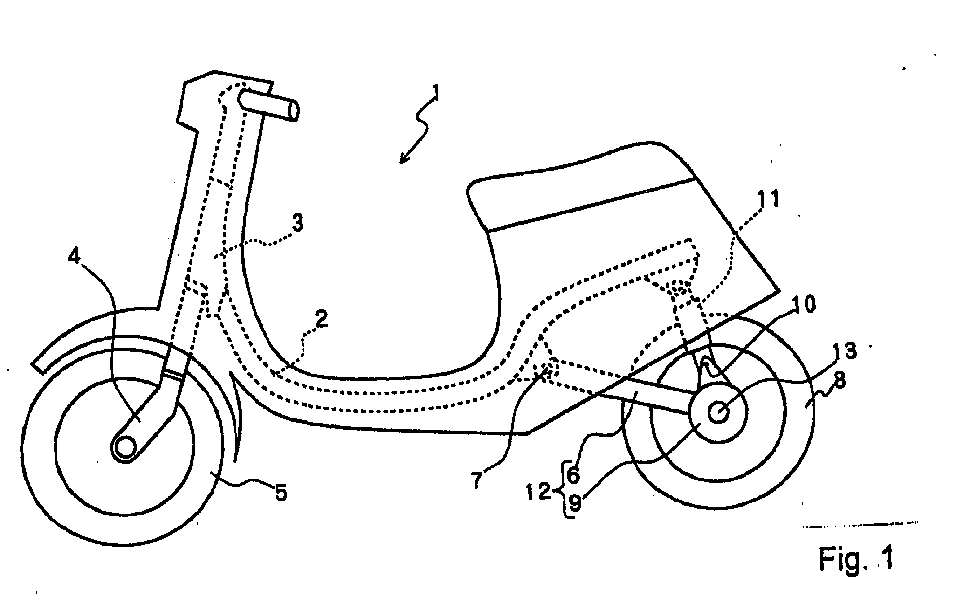

Fig. 1 is an external view of a small motorcycle comprising a preferred embodiment of the wheel motor.

A motor scooter 1 is provided with a main frame 2 forming a body, at the front of which is provided a front fork 4 passing through a head pipe 3, and to the front fork 4 is fitted a front wheel 5. To the middle of the body is attached a swing arm 6 extending from the main frame 2 toward the rear, for swinging movement through a pivot 7. The swing arm 6 is connected integrally to a wheel motor unit 9 mounted on an axle (output shaft) 13 of a rear wheel 8, to form a drive unit 12. In this wheel motor unit 9 are assembled a power source or a wheel motor, a gear shift device (not shown), etc. The wheel unit 9 is connected to the lower end of a shock absorber 11 through a suspension pivot 10. The upper end of the shock absorber 11 is attached to the main frame 2 at the rear end of the body. Thus, the rear wheel (drive wheel) 8 incorporating the wheel motor is supported on the main frame 2 for swinging movement relative thereto.

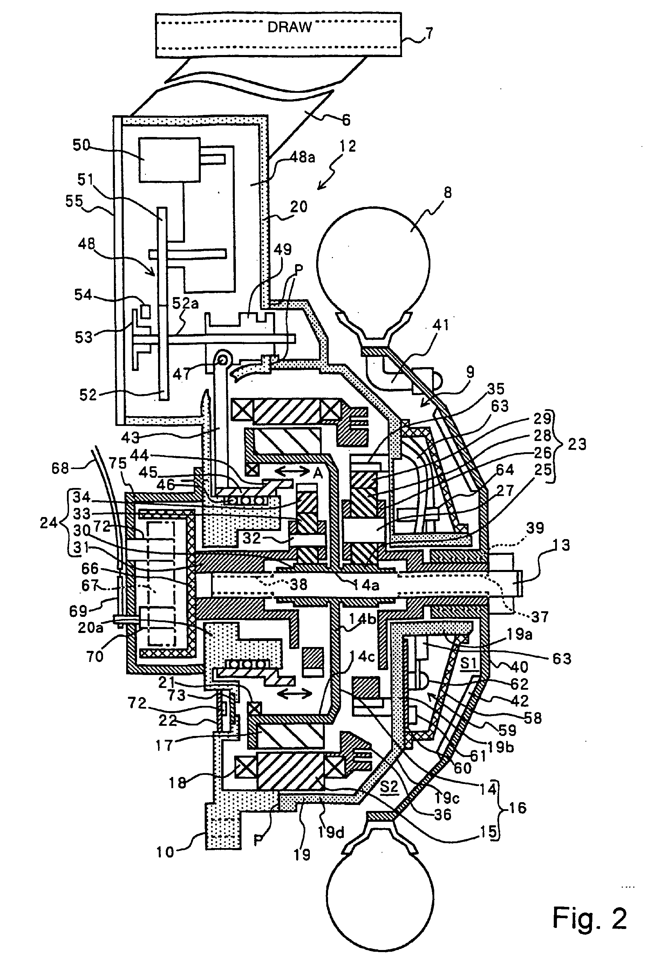

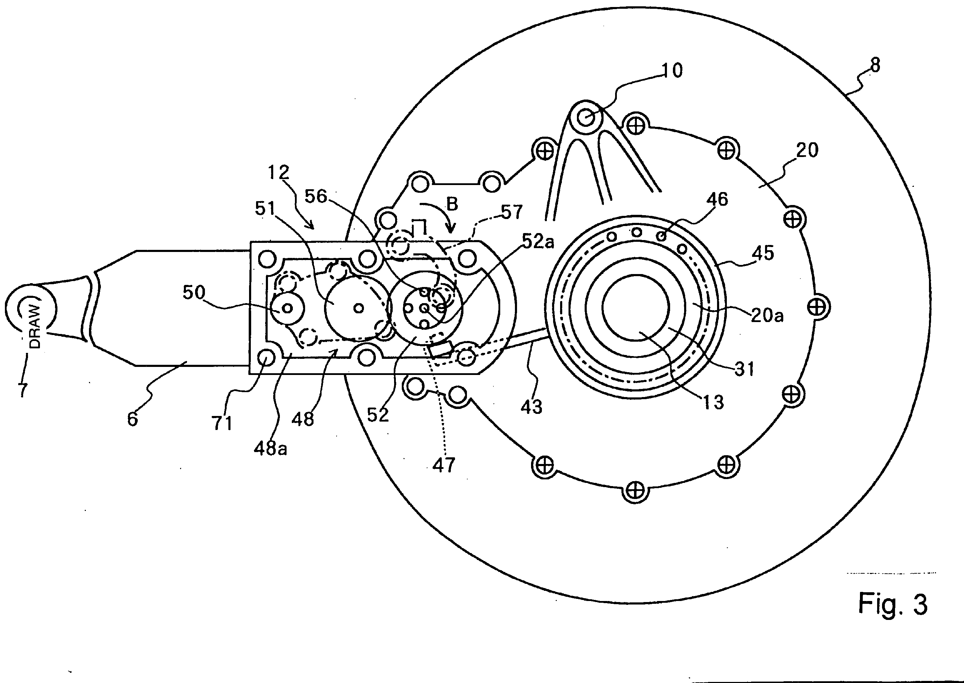

Fig. 2 is a sectional view of a drive wheel of a motor vehicle incorporating an embodiment of a wheel motor; and Fig. 3 a structural illustration as viewed from the side of the same. This example shows a drive unit comprising a wheel motor having a planetary two-speed gear shift device.

As shown in Fig. 2, on the output shaft (rear axle) 13 is mounted a rotor, and a stator 15 is disposed surrounding the rotor to form a motor 16. To the rotor 14 at its outside circumferential portion are fixed a plurality of magnets. On the stator are wound coils 18 facing the magnets 17. The motor 16 formed of the rotor 14 and stator 15 is covered by a motor cover 19 from the outside (right side in the figure). The motor cover 19 is fixed to a frame body 20 of the wheel motor unit 9 with bolts (not shown). Mating surfaces P of the motor cover 19 with the frame body 20 are in the same plane.

The rotor 14 is composed of a hollow shaft section 14a fitted on the output shaft 13, a disk section 14b perpendicular to the output shaft 13, and a cylinder section 14c with magnets 17 fixed thereto on the outside circumference. To the end of the cylinder section 14c on its inside circumference is fixed a rotation detecting magnet 21, which is adapted to be detected through a plastic plate 73 for detection of rotation of the motor 16, by an encoder 22 provided with a magnetic sensor (IC) 72 disposed on the same circumference as the magnet 21 with respect to the output shaft 13.

The disk section 14b of the rotor 14 is provided approximately in the middle of the hollow shaft section 14a, and at the outer side (right side in the figure) and the inner side (left side in the figure) of the disk section are disposed a first reduction gear means 23 and a second reduction gear means 24 each formed by a planetary gear mechanism, respectively.

The first reduction gear means 23 is composed of a sun gear 25 formed integral with the hollow shaft section 14a, a plurality of (for example, three) planetary gears 28 supported on a carrier 26 by shafts 27, and a ring gear 29 provided outside the planetary gears. The planetary gears 28 are adapted to mesh with the sun gear 25 and ring gear 29, to rotate about the shafts 27, and to revolve around the sun gear 25.

Likewise, the second reduction gear means 24 is composed of a sun gear 30 formed integral with the hollow shaft section 14a, a plurality of (for example, three) planetary gears 33 supported on a carrier 31 by shafts 32, and a ring gear 34 provided outside the planetary gears.

The first and second reduction gear means 23, 24 form gear shift positions of a first gear (low speed) and a second gear (high speed) of a gear shift mechanism of the vehicle, respectively, and the outside diameter of the ring gear 29 of the first reduction gear means 23 of a high reduction gear ratio is greater than that of the ring gear 34 of the second reduction gear means 24 of a low reduction gear ratio. In addition, on the outside circumferential surface of the ring gear 29 of the first reduction gear means is provided a one-way clutch 35, as will be described later, so that the first reduction gear means 23 becomes even larger in shape than the second reduction gear means 24. Therefore, as a result that the first reduction gear means 23 is provided at the outer side of the rotor 14 and the second reduction gear means 24 at the inner side of the rotor 14 and within its cylinder section 14c, the planetary reduction gear mechanisms can be disposed at the left and right sides of the rotor 14 in a spatially efficient and compact manner.

On the outer side face (right side in the figure) of the stator 15 is provided, in an annularly projecting manner, a current collector 36 for controlling current supply to the coils 18, for example, of a three-phase structure. Radially inwardly of the current collector 36 is disposed the first reduction gear means 23 in the proximity of the rotor 14 compactly.

The ring gear 29 of the first reduction gear means 23 is adapted to be engaged with the one-way clutch 35 fixed to the motor cover 19. The one-way clutch 35 acts in the direction in which the ring gear 29 rotates idly when rotation of the output shaft through the second reduction gear means 24 becomes faster than that of the output shaft through the first reduction gear means 23, with a dog clutch shifted toward the second reduction gear means 24, as will be described later.

The carrier 26 of the first reduction gear means 23 is coupled to the output shaft 13 through a serration 37. Likewise, the carrier 31 of the second reduction gear means 24 is coupled to the output shaft 13 through a serration 38. The carrier 26 of the first reduction gear means 23 is coupled also to a wheel 40 through a serration 39. The wheel 40 retains the rear wheel 8. The rear wheel 8 is provided with an air valve 41. The wheel 40 has a disk-like cross section with an outwardly convexed center portion (hub portion), and it is formed with fins 42 on the middle section. The fins 42 are adapted to introduce outside air into the space inside the wheel for cooling.

Now, a two-speed gear-shift drive mechanism formed of the first and second reduction gear means 23, 24 will be described.

On a frame body 20a, a portion of the frame body 20 at which the frame body 20 of the drive unit 12 is mounted on the output shaft 13, is fitted, through balls 46, a cylindrical slider 45 for sliding movement in axial directions shown by an arrow A. At one end of the slider 45 is provided a dog clutch 44 adapted to mesh with the outside circumferential portion of the ring gear 34 of the second reduction gear means 24. At the other end of the slider 45 from the dog clutch 44 is provided a lever 43. A pin 47 at the end of the lever 43 is fitted in a cam groove in a rotary shift cam 49 of a gear shift actuator 48. The gear shift actuator 48 comprises a shift motor 50, a drive transmission gear 51 connected to the shift motor 50, and a driven transmission gear 52 meshing with the drive transmission gear 51, and on a shaft 52a of the driven transmission gear 52 is mounted the rotary shift cam 49. To the shaft 52a of the driven transmission gear 52 is also fixed a rotary plate 53, whose shift position is detected by a shift sensor 54. To a housing 48a of the gear shift actuator 48 is attached a lid 55 (Fig. 2) with six bolts 71 (Fig. 3).

On the end face of the rotary shift cam 49 are provided four pins 56 (Fig. 3) radially at regular intervals of 90°, and the forward end of a lever 57 biased by a spring (not shown) in the direction of an arrow B is adapted to fits in between the pins 56 for clicking operation each time the shift cam 49 rotates by 90°.

As drive of the shift motor 50 causes the shift cam 49 to rotate, the pin 47 fitted in the cam groove moves in directions of the shaft 52a to move the slider 45 axially through the lever 43 (arrow A). Thus, the dog clutch 44 travels between two positions of a first gear shift position (shown in the figure) where it is disconnected from the ring gear 34 and a second gear shift position where it meshes with the ring gear 34.

When the rotor 14 of the motor 16 rotates, both of the sun gears 25, 30 of the first and second reduction gear means 23, 24 formed around the hollow shaft 14a are rotated.

Since the dog clutch 44 is disconnected at the first gear shift position, even if the sun gear 30 is rotated, the planetary mechanism of the second reduction gear means 24 doesn't work because of the idle rotation of the ring gear 34. On the other hand, at this time, since the ring gear 29 of the first reduction gear means 23 is fixed to the motor cover 19 through the one-way clutch 35, the planetary mechanism works and rotation of the rotor 14 is transmitted from the sun gear 25 of the first reduction gear means 23 through the planetary gears 28 to the carrier 26 for rotation at a given reduction gear ratio. The rotation of the carrier 26 is transmitted through the serration 37 to the output shaft 13 and through the serration 39 to the wheel 40 for rotation, to drive the rear wheel 8.

At the second shift position, the dog clutch 44 meshes with the ring gear 34 of the second reduction gear means 24 for fixing. Therefore, the planetary mechanism of the second reduction gear means 24 works and the carrier 31 is rotated faster than the first reduction gear means 23. The rotation of the carrier 31 is transmitted through the serration 38 to the output shaft 13 and further through the serration 39 to the wheel 40 for rotation at the reduction gear ratio of the second reduction gear means 24. At this time, although rotation of the output shaft 13 is transmitted for rotation through the serration 37 to the carrier 26 of the first reduction gear means 23, since the ring gear 29 rotates faster than the planetary mechanism of the first reduction gear means 23, it rotates idly due to the function of the one-way clutch 35 without restricting rotation of the carrier 26.

The motor cover 19 disposed inside the wheel 40 for covering the motor 16 from outside comprises a shaft holding section 19a, coaxial with the output shaft 13, for holding the output shaft 13, a disk section 19b adjoining the shaft holding section 19a and perpendicular to the output shaft 13, a tapered section 19c spreading in conical fashion from the peripheral portion of the disk section 19b, and a cylinder section 19d, coaxial with the output shaft 13, adjoining the edge portion of the tapered section 19c. The outside of the disk section 19b is covered by a cover 58. The cover 58 is inclined following the inclination of the wheel 40, and a space S1 is formed between the cover 58 and the inside surface of the wheel 40. The conical tapered section 19c is formed more or less along the slanting surface near the edge of the wheel 40, and a space S2 is formed between the wheel 40 and the tapered section 19c inside the wheel 40 for adequate passage of air. Thus, when the wheel 40 is rotated and cooling winds are introduced from its fins 42, the cooling winds flow smoothly through the space 1 and the space 2 expanding outwardly from the space 1 along the outside surface of the motor cover 19 to cool the disk section 19b as well as the motor 15 inside, effectively through the tapered section 19c. In addition, an adequate turning space for the air valve 41 during rotation of the wheel 40 is secured by the space S2 formed by the tapered section 19c.

On the outside surface of the disk section 19b of the motor cover 19 is mounted an electric power controlling inverter 59. The inverter 59 is composed of a substrate 60, of a high heat radiating characteristic, made, for example, of aluminum or its alloy, a plurality of switching FETs 61 mounted on the substrate 60, connection terminals 62 for cables 63, etc. The substrate 60 is attached closely to the disk section 19b of the motor cover 19 with adhesive or bolts (not shown). Alternatively, a plastic substrate may be used in place of the metal substrate 60, and electrode terminals of FETs and connection terminals may be brought in contact with metal parts such as the motor cover, etc, for heat radiation. The thickness of the substrate mounting area of the disk section 19b is greater than that of the other area of the disk section 19b than the substrate mounting area. As a result of the substrate being attached closely to such a thicker disk section 19b, an adequate heat radiating function is effected through the disk section 19b of the motor cover 19 made of a metallic material, of high heat conductivity, such as aluminum or its alloy, increasing the function of cooling the inverter 59.

The inverter 59 is disposed on the outside surface side of the motor cover 19, that is, in a region surrounding the shaft holding section 19a having an axial length, so that it can be arranged compact in a space formed surrounding the shaft holding section 19a, and an adequate cooling effect can be obtained from winds produced by fins 42 of the wheel 40.

Since the other area (area shown on the upper side of the output shaft 13 in Fig. 2) of the disk section 19b of the motor cover 19 than the inverter mounting area is formed thin, weight saving of the motor cover 19 is effected, and a current sensor 64 connected to the inverter 59, electrolytic capacitors (not shown), wire cables 63, etc, are disposed in this area, effecting a spatially compact configuration.

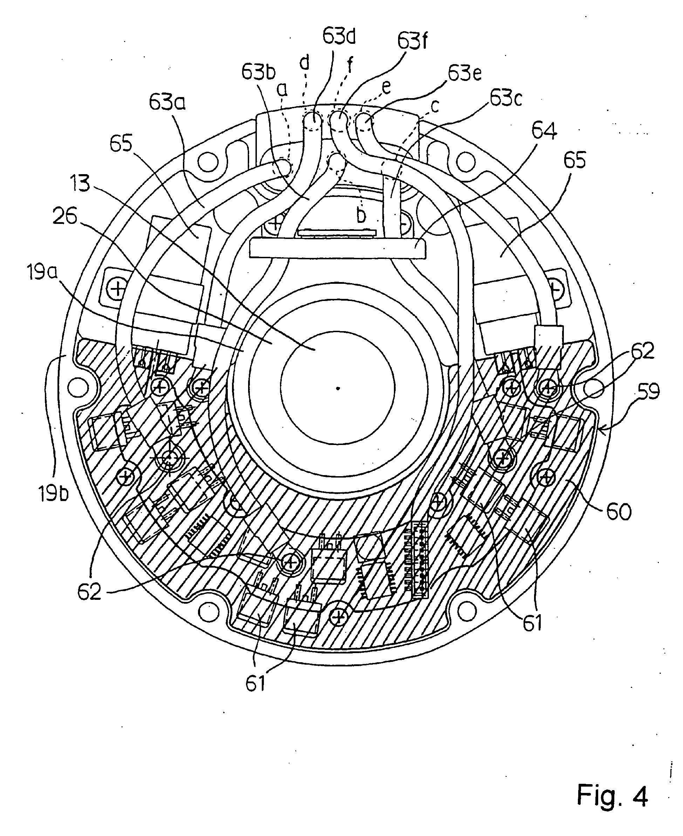

Fig. 4 is a front view of the motor cover disk section 19b with the inverter 59 mounted thereon. The substrate 60 constituting the inverter 59, as shown in the figure by a hatched portion, is in the shape of an arc (approximately half-circular ring in this example), provided with a plurality of switching FETs 61 corresponding to coils (not shown), and connection terminals 62. To the connection terminals 62 are connected, for example, three cables 63a, 63b, 63c corresponding to the three-phase coils of the motor, respectively. In addition, there disposed are cables such as a controlling sending/receiving cable 63f to be connected to a controller (not shown) for controlling switching according to the coil current detected by the current sensor 64, and plus and minus power source cables 63d, 63e for distributing power source voltage to the coils based on the command from the controller. The cables 63c-63f are connected to the motor inside, respectively through through-holes a-f provided in the upper part of the motor cover.

The current sensor 64 and voltage charging electrolytic capacitors 65 are disposed apart from the substrate 60 (in the thinner disk section 19b), as described in Fig. 2.

The wheel motor of this embodiment may be an oil-bath type wheel motor with a motor cover 19 of a sealed structure. In this case, lubricating oil is collected in the bottom of the motor, and the oil is agitated by the rotor 14, planetary gears 28, 33 or ring gears 29, 34 to be supplied to the entire region inside the motor. In the case of such an oil-bath type wheel motor, the substrate 60 of the inverter 59 is preferably bonded to the motor cover 19 on the lower side where lubricating oil is collected. This will provide cooling effect by oil. Also, in this case, take-out holes (through-holes) of cables 63 passing through the motor cover 19 are preferably provided on the upper side of the motor cover 19. This will prevent oil leakage.

The wheel motor of this embodiment is combined with a brake system, as shown in Fig. 2. As described above, the rear wheel 8, wheel 40 and output shaft (axle) 13 are coupled together through serrations 37, 39, and the output shaft 13 is coupled to the carrier 31 of the second reduction gear means 24 through the serration 38. In this embodiment, to the inner end face of the carrier 31 is fixed a brake drum 66 with bolts (not shown). Inside the brake drum 66 is provided a brake shoe 67. When a brake wire 68 is pulled to actuate a brake cam 70 through a lever 69, the brake shoe 67 is stretched outwardly with a pivot 75 as a center and pressed against the inside surface of the brake drum 66, effecting a braking function. The brake cam 70 and the pivot 75 are supported on a brake cover 74.

As a result of a brake being assembled in the wheel motor at its inner end, the brake can be disposed compact in a small space, and the brake wire as well, efficiently without interference with the reduction gear mechanism or the like.

Alternatively, a disc brake system may be assembled in place of the drum brake.

According to the embodiment as described above, a hollow rotational shaft of the rotor is mounted on the output shaft, and at both sides of the hollow shaft are mounted reduction gear means of different reduction gear ratios, respectively. Therefore, a reduction gear means on the wheel side (final output side) and another reduction gear mechanism on the opposite side are connected to each other on the same axis through the output shaft passing through the hollow shaft section of the rotor, so that rotation of the rotor can be transmitted efficiently to the wheel from either of the reduction gear means, and the reduction gear means can be assembled compactly in the wheel together with a motor.

In addition, said rotor has a cylindrical shape, and a reduction gear means is disposed inside the cylinder section of said rotor. In this arrangement, on the outside circumferential surface of the cylinder section of the rotor are secured magnets, and in a space inside the cylinder section can be disposed a reduction gear means, effecting a compact configuration both in the axial and radial directions.

Further, said multi-speed reduction gear mechanism is a planetary mechanism, having at least two reduction gear means of different reduction gear ratios of a first reduction gear means and a second reduction gear means; the first reduction gear means of a smaller reduction gear ratio is mounted at the outer side of the rotor, and the second reduction gear means of a larger reduction gear ratio inside the cylinder section of said rotor; a ring gear of said first reduction gear means is provided with a one-way clutch; and a ring gear of said second reduction gear means is provided with shift means for causing the ring gear to be fixed and to rotate idly. In this arrangement, the first reduction gear means of a small reduction gear ratio (thus, the diameter of the ring gear of the planetary mechanism is large) is disposed at the outer side of the cylinder section of the rotor, and the second reduction gear means of a large reduction gear ratio (thus, the diameter of the ring gear is small) inside the cylinder section of the rotor, so that the reduction gear means can be assembled efficiently without space loss. In addition, shift means causes, at its low speed shift position, the ring gear of the high speed second reduction gear means to rotate idly to thereby actuate the low speed first reduction gear means, while it causes, at its high speed shift position, the ring gear of the second reduction gear means to be fixed, whereby the motor can be driven at high rotational speed. During operation of the second reduction gear means, the one-way clutch causes the first reduction gear means to rotate idly without operation, thereby providing a smooth shift action with a compact configuration.

Furthermore, said shift means comprises a dog clutch adapted to mesh with said ring gear, a slider for moving the dog clutch reciprocally in directions of the output shaft, and a shift cam for driving the slider. In this arrangement, on the output shaft is mounted a slider, for example, of a cylindrical shape, and the slider is provided with a dog clutch, which is arranged to be engageable with and disengageable from the ring gear of the first reduction gear means, so that gear shift positions can be selected when the shift cam causes the slider to move in the axial directions.

Still further, said stator is provided with a current collector projecting in the axial direction, and said first reduction gear means is provided radially inwardly of said current collector. In this arrangement, a coil current controlling current collector projects from the side face of the stator, and in a space formed radially inwardly of the current collector can be disposed the first reduction gear means, effecting a compact configuration.

According to this embodiment as described above, a wheel is fixed to one end (outer end) of an output shaft, and a hollow rotational shaft of the rotor is mounted on said output shaft. Therefore, a power transmission mechanism on the output shaft at the wheel side (at the final output side) and another power transmission mechanism on the opposite side are connected to each other through the output shaft, and braking means (drum or disc) is fixed to the inner end (opposite end from the wheel). As a result, the braking means can be fixed to the output shaft without need of restricting the motor during braking operation, and it can be assembled in a wheel with a compact configuration by using the space effectively.

In addition, on the output shaft at both sides of said rotor are disposed selectively reduction gear means of different reduction gear ratios. In this arrangement, a hollow rotational shaft of the rotor is mounted on the output shaft, as described above, and at both sides of the rotor shaft are mounted reduction gear means of different reduction gear ratios. Therefore, a reduction gear means on the wheel side (final output side) and another reduction gear means on the opposite side are connected to each other on the same axis through the output shaft passing through the hollow shaft section of the rotor, and selective operation of these reduction gear means allows rotation of the rotor to be transmitted efficiently to the wheel from either of the reduction gear means, so that the reduction gear means can be assembled compactly in the wheel together with the braking device.

Further, said rotor has a cylindrical shape, and a reduction gear means is disposed inside the cylinder section of said rotor. In this arrangement, magnets are secured on the outside circumferential surface of the cylinder section of the rotor, and a reduction gear means can be disposed in a space inside the cylinder section, effecting a compact configuration both in the axial and radial directions.

According to the embodiment as described above, on an output shaft is mounted a motor cover for covering the outer surface of the motor; the motor cover has a shaft holding section for holding the output shaft; the shaft holding section has a certain axial length to hold the output shaft; and within this length and in a region surrounding the shaft holding section is provided an arc-shaped inverter substrate. Therefore, the inverter is disposed in a space formed between the wheel and the motor cover by the shaft holding section, so that the space inside the wheel is utilized effectively, providing a configuration compact particularly in axial direction.

In addition, said substrate is bonded to the disk section of said motor cover. Therefore, the inverter substrate is bonded on the disk surface of the motor cover perpendicular to the output shaft, so that the inverter can be secured in the wheel without any special fixing member, providing a simplified configuration as well as an effective heat radiation function through the motor cover.

Further, on the wheel at positions corresponding to said substrate are formed fins for introducing cooling winds into a space inside the wheel through rotation of the wheel. Therefore, cooling winds are introduced into the space inside the wheel from outside to cool there by the function of fins formed on the wheel, so that the inverter provided on the outside surface of the motor cover can be cooled down effectively.

Furthermore, said motor cover is provided with a conical tapered section between said disk and cylinder sections. In this arrangement, the motor cover can be disposed compact without interference with an air valve of the tire projecting inwardly at the peripheral portion of the wheel, and cooling winds flow from the end face of the motor cover toward the peripheral portion thereof in an expanding fashion, so that the inverter and the motor behind the inverter can be effectively cooled down.

Moreover, the motor cover allows the motor to be formed into a sealed structure with oil contained therein, and thus an oil-bath structure is effected in which oil is agitated by the rotor or a reduction gear means to be circulated. Therefore, the inverter mounted on the outside surface of the motor cover can be cooled down through lubricating action by oil as well as its cooling function.

Further, said substrate is bonded to the disk section on the lower side of said motor cover. In this arrangement, in the wheel motor of an oil-bath type, the inverter substrate is bonded on the outside surface of the motor cover at its lower portion where oil is collected, so that inverter is subjected to cooling action by oil at all times.

Still further, upwardly of said substrate are disposed electrolytic capacitors, wire cables and a current sensor connected to the inverter. In this arrangement, in a vacant space above the inverter are disposed electrolytic capacitors, a current sensor and wire cables, thereby providing a compact configuration as a result of effective use of the space.

Yet further, in the upper part of said motor cover are provided through-holes for said wire cables. In this arrangement, wire cables pass through the upper part of the motor cover, so that oil collected in the bottom of the oil-bath type motor is prevented from leaking to the outside through cable holes.

The embodiment described above refers to a gear shift device for a wheel motor comprising a wheel mounted on an output shaft, a rotor disposed inside the wheel and having a hollow shaft section through which the output shaft passes, a stator having coils facing the rotor, and a multi-speed reduction gear mechanism, wherein said gear shift device for a wheel motor comprises reduction gear means of different reduction gear ratios disposed on the output shaft at both sides of said rotor, respectively.

Preferably, said rotor has a cylindrical shape, and a reduction gear means is disposed inside the cylinder section of said rotor.

Beneficially, said multi-speed reduction gear mechanism is a planetary mechanism, having at least two means of different reduction gear ratios of a first reduction gear means and a second reduction gear means; the first reduction gear means of a smaller reduction gear ratio is mounted at the outer side of the rotor, and the second reduction gear means of a larger reduction gear ratio inside the cylinder section of said rotor; a ring gear of said first reduction gear means is provided with a one-way clutch; and a ring gear of said second reduction gear means is provided with shift means for causing the ring gear to be fixed and to rotate idly.

Further, preferably said shift means comprises a dog clutch adapted to mesh with said ring gear, a slider for moving the dog clutch reciprocally in directions of the output shaft, and a shift cam for driving the slider.

Additionally, said stator may be provided with a current collector projecting in the axial direction, and said reduction gear means is provided radially inwardly of said current collector.

The embodiments described above further refer to a braking device for a wheel motor comprising a wheel mounted on an output shaft, a rotor disposed inside the wheel and having a hollow shaft section through which the output shaft passes, and a stator having coils facing the rotor, wherein said braking device for a wheel motor comprises a brake drum or a brake disc fixed to the opposite end of said output shaft from said wheel.

Preferably, on the output shaft at both sides of said rotor are disposed selectively reduction gear means of different reduction gear ratios.

Beneficially, said rotor has a cylindrical shape, and a reduction gear means is disposed inside the cylinder section of said rotor.

The embodiments described above further refer to an inverter arrangement in a wheel motor comprising a rotor mounted on an output shaft inside a wheel mounted on the output shaft, a stator having coils facing the rotor, a motor cover for covering the rotor and the stator inside said wheel from outside, and an electric power controlling inverter with switching elements mounted on a substrate, wherein said motor cover comprises a shaft holding section for holding said output shaft, a disk section adjoining the shaft holding section and perpendicular to said output shaft, and a cylinder section adjoining the disk section, and the substrate of said inverter is disposed in a region surrounding the shaft holding section of said motor cover.

Preferably, said substrate is bonded to the disk section of said motor cover.

Further, preferably on the wheel at positions corresponding to said substrate are formed fins for introducing cooling winds into a space inside the wheel through rotation of the wheel.

Beneficially, said motor cover is provided with a conical tapered section between said disk and cylinder sections.

It is further beneficial if a wheel motor of an oil-bath type is formed by said motor cover.

Additionally, said substrate may be bonded to the disk section on the lower side of said motor cover.

Upwardly of said substrate there may be disposed electrolytic capacitors, wire cables and a current sensor connected to the inverter.

Additionally, in the upper part of said motor cover there may be provided through-holes for said wire cables.

## Claims

1. Wheel motor, in particular for two-wheeled vehicles, comprising a wheel (8) mounted on an output shaft (13), a rotor (14) disposed inside the wheel (8) and having a hollow shaft section (14a) through which the output shaft (13) passes, and a stator (15) having coils (18) facing the rotor (14), and a gear shift device having a multi-speed reduction gear mechanism, **characterized in that** the multi-speed reduction gear mechanism comprises at least two reduction gear means (23,24) of different reduction gear ratios, said reduction gear means (23,24) of different reduction gear ratios being respectively disposed on the output shaft (13) at both sides of said rotor (14).

2. Wheel motor according to claim 1, **characterized in that** said rotor (14) has a cylindrical shape, and one of the reduction gear means (24) is disposed inside the cylinder section (14c) of said rotor (14).

3. Wheel motor according to claim 1 or 2, **characterized in that** said multi-speed reduction gear mechanism is a planetary mechanism having at least a first reduction gear means (23) and a second reduction gear means (24), wherein the first reduction gear means (23) of a smaller reduction gear ratio is mounted at the outer side of the rotor (14), and the second reduction gear means (24) of a larger reduction gear ratio is mounted inside the cylinder section (14c) of said rotor (14).

4. Wheel motor according to claim 3, **characterized in that** a ring gear (29) of said first reduction gear means (23) is provided with a one-way clutch (35); and a ring gear (34) of said second reduction gear means (24) is provided with shift means for causing the ring gear (34) to be fixed and to rotate idly.

5. Wheel motor according to claim 4, **characterized in that** said shift means comprises a dog clutch (44) adapted to mesh with said ring gear (34), a slider (45) for moving the dog clutch (44) reciprocally in directions of the output shaft (13), and a shift cam (49) for driving the slider (45).

6. Wheel motor according to at least one of the preceding claims 1 to 5, **characterized in that** said stator (15) is provided with a current collector (36) projecting in the axial direction.

7. Wheel motor according to claim 6, **characterized in that** said first reduction gear means (24) is provided radially inwardly of said current collector (36).

8. Wheel motor according to at least one of the preceding claims 1 to 7, **characterized by** a braking device, wherein a brake drum (66) or a brake disc is fixed to an end of the output shaft (13) opposite from said wheel (8).

9. Wheel motor according to at least one of the preceding claims 1 to 8, **characterized by** an inverter arrangement comprising a motor cover (19) for covering the rotor (14), the stator (15), and an electric power controlling inverter (59) with switching elements (61) mounted on a substrate (60), wherein said motor cover (19) comprises a shaft holding section (19a) for holding said output shaft (13), a disk section (19b) adjoining the shaft holding section (19a) and perpendicular to said output shaft (13), and a cylinder section (19d) adjoining the disk section (19b), and wherein the substrate (60) is disposed in a region surrounding the shaft holding section (19a) of said motor cover (19).

10. Wheel motor according to claim 9, c**haracterized in that** said substrate (60) is bonded to the disk section (19b) of said motor cover (19).

11. Wheel motor according to claim 9 or 10, **characterized by** fins (42) formed on the wheel (8) at positions corresponding to said substrate (60) for introducing cooling air into a space inside the wheel (8) by means of rotation of the wheel (8).

12. Wheel motor according to at least one of the preceding claims 9 to 11, **characterized in that** said motor cover (19) is provided with a conical tapered section (19c) between said disk section (19b) and said cylinder section (19d).

13. Wheel motor according to at least one of the preceding claims 9 to 12, **characterized in that** a wheel motor of an oil-bath type is formed by said motor cover (19).

14. Wheel motor according to claim 13, **characterized in that** said substrate (60) is bonded to the disk section (19b) on the lower side of said motor cover (19) and/or upwardly of said substrate (60) are disposed electrolytic capacitors, wire cables (63) and a current sensor (64) connected to the electric power controlling inverter (59) and/or in the upper part of said motor cover (19) are provided through-holes (a to f) for said wire cables (63a to 63f).

## Patentansprüche

1. Radmotor, insbesondere für zweirädrige Fahrzeuge, aufweisend ein Rad (8), montiert auf einer Ausgangswelle (13), einen Rotor (14), angeordnet innerhalb des Rades (8) und mit einem hohlen Wellenabschnitt (14a), durch den die Ausgangswelle (13) hindurchgeht, und einen Stator (15), der Spulen (18) hat, die dem Rotor (14) zugewandt sind, und eine Gangschaltvorrichtung , die eine Mehrgang-Reduktionsgetriebevorrichtung hat, **dadurch gekennzeichnet, dass** die Mehrgang- Reduktionsgetriebevorrichtung aufweist zumindest zwei Reduktionsgetriebeeinrichtungen (23, 24) von unterschiedlichen Reduktions- Übersetzungsverhältnissen aufweist, wobei die Reduktionsgetriebeeinrichtungen (23, 24) von unterschiedlichen Reduktions- Übersetzungsverhältnissen auf der Ausgangswelle (13) auf beiden Seiten des Rotors (14) angeordnet sind.

2. Radmotor nach Anspruch 1, **dadurch gekennzeichnet, dass** der Rotor (14) eine zylindrische Form hat und eine der Reduktionsgetriebevorrichtungen (24) innerhalb des Zylinderabschnittes (14c) des Rotors (14) angeordnet ist.

3. Radmotor nach Anspruch 1 oder 2, **dadurch gekennzeichnet, dass** die Mehrgang- Reduktionsgetriebevorrichtung ein Planetengetriebe ist, das zumindest eine erste Reduktionsgetriebevorrichtung (23) und eine zweite Reduktionsgetriebevorrichtung (24) hat, wobei die erste Reduktionsgetriebevorrichtung (23) mit einem kleineren Reduktions- Übersetzungsverhältnis an der Außenseite des Rotors (14) montiert ist und die zweite Reduktionsgetriebevorrichtung (24) mit einem größeren Reduktions- Übersetzungsverhältnis innerhalb des Zylinderabschnittes (14c) des Rotors (14) montiert ist.

4. Radmotor nach Anspruch 3, **dadurch gekennzeichnet, dass** das ein Ringzahnrad (29) der ersten Reduktionsgetriebeeinrichtung (23) mit einer Freilaufkupplung (35) versehen ist; und ein Ringzahnrad (34) der zweiten Reduktionsgetriebeeinrichtung (24) mit einer Schalteinrichtung versehen ist, um das Ringzahnrad (34) zu veranlassen, festgelegt zu sein oder im Leerlauf zu laufen.

5. Radmotor nach Anspruch 4, **dadurch gekennzeichnet, dass** die Schalteinrichtung aufweist eine Klauenkupplung (44), vorgesehen um mit dem Ringzahnrad (34) in Kämmeingriff zu kommen, ein Gleitstück (45), um die Klauenkupplung (44) hin- und hergehend in den Richtungen der Ausgangswelle (13) zu bewegen, und einen Schaltnocken (49), um das Gleitstück (45) anzutreiben.

6. Radmotor nach zumindest einem der vorhergehenden Ansprüche 1 bis 5, **dadurch gekennzeichnet, dass** der Stator (15) mit einem Stromsammler (36) versehen ist, der in der axialen Richtung vorspringt.

7. Radmotor nach Anspruch 6, **dadurch gekennzeichnet, dass** die erste Reduktionsgetriebeeinrichtung (23) radial einwärts des Stromsammlers (36) vorgesehen ist.

8. Radmotor nach zumindest einem der vorhergehenden Ansprüche 1 bis 7, **gekennzeichnet durch** eine Bremsvorrichtung, wobei eine Bremstrommel (66) oder eine Bremsscheibe an einem Ende der Ausgangswelle (13), gegenüberliegend zu dem Rad (8), angeordnet ist.

9. Radmotor nach zumindest einem der vorhergehenden Ansprüche 1 bis 8, **gekennzeichnet durch** eine Inverteranordnung, aufweisend eine Motorabdeckung (19) zum Abdecken des Rotors (14), den Stator (15) und einen Elektroenergiesteuernder Inverter (59) mit Schaltelementen (61), montiert auf einem Substrat (60), wobei die Motorabdeckung (19) aufweist einen Wellenhalteabschnitt (19a) zum Halten der Ausgangswelle (13), einen Scheibenabschnitt (19b), anliegend an dem Wellenhalteabschnitt (19a) und rechtwinklig zu der Ausgangswelle (13) und einen Zylinderabschnitt (19d), , anliegend an den Scheibenabschnitt (19b), und wobei das Substrat (60) in einem Bereich angeordnet ist, der den Wellenhalteabschnitt (19a) der Motorabdeckung (19) umgibt.

10. Radmotor nach Anspruch 9, **dadurch gekennzeichnet, dass** das Substrat (60) mit dem Scheibenabschnitt (19b) der Motorabdeckung (19) haftverbunden ist.

11. Radmotor nach Anspruch 9 oder 10, **gekennzeichnet durch** Rippen (42), gebildet an dem Rad (8) an Positionen, die dem Substrat (60) entsprechen, um Kühlluft in einen Raum innerhalb des Rades (8) mittels der Drehung des Rades (8) einzuleiten.

12. Radmotor nach zumindest einem der vorhergehenden Ansprüche 9 bis 11, **dadurch gekennzeichnet, dass** die Motorabdeckung (19) mit einem sich konisch verjüngendem Abschnitt (19c) zwischen dem Scheibenabschnitt (19b) und dem Zylinderabschnitt (19d) versehen ist.

13. Radmotor nach zumindest einem der vorhergehenden Ansprüche 9 bis 12, **dadurch gekennzeichnet, dass** ein Radmotor von einem Ölbad- Typ durch die Motorabdeckung (19) gebildet ist.

14. Radmotor nach Anspruch 13, **dadurch gekennzeichnet, dass** das Substrat (60) mit dem Scheibenabschnitt (19b) auf der unteren Seite der Motorabdeckung (19) haftverbunden ist und / oder oberhalb des Substrates (60) elektrolytische Kondensatoren, Drahtkabel (63 und ein Stromsensor (64) ), verbunden mit dem Elektroenergie- steuernden Inverter (59) angeordnet sind, und / oder in dem oberen Teil der Motorabdeckung (19) Durchgangsbohrungen (a bis f) für die Drahtkabel (63a bis 63f) vorgesehen sind.

## Revendications

1. Moteur de roue, en particulier pour des véhicules à deux roues, comprenant une roue (8) montée sur un arbre de sortie (13), un rotor (14) disposé à l'intérieur de la roue (8) et présentant une partie d'arbre creux (14a) à travers laquelle l'arbre de sortie (13) passe, et un stator (15) ayant des bobines (18) faisant face au rotor (14), et un dispositif de changement de vitesse disposant d'un mécanisme d'engrenage de réduction à plusieurs vitesses, **caractérisé en ce que** le mécanisme d'engrenage de réduction à plusieurs vitesses comprend au moins deux moyens d'engrenage de réduction (23, 24) ayant différents rapports d'engrenage de réduction, lesdits moyens d'engrenage de réduction (23, 24) ayant différents rapports d'engrenage de réduction étant respectivement disposés sur l'arbre de sortie (13) au niveau des deux côtés dudit rotor (14).

2. Moteur de roue selon la revendication 1, **caractérisé en ce que** ledit rotor (14) présente une forme cylindrique et l'un des moyens d'engrenage de réduction (24) est disposé à l'intérieur de la partie de cylindre (14c) dudit rotor (14).

3. Moteur de roue selon la revendication 1 ou 2, **caractérisé en ce que** ledit mécanisme d'engrenage de réduction à plusieurs vitesses est un mécanisme planétaire ayant au moins un premier moyen d'engrenage de réduction (23) et un second moyen d'engrenage de réduction (24), dans lequel le premier moyen d'engrenage de réduction (23) d'un plus petit rapport d'engrenage de réduction est monté au niveau du côté extérieur du rotor (14) et le second moyen d'engrenage de réduction (24) d'un plus grand rapport d'engrenage de réduction est monté à l'intérieur de la partie de cylindre (14c) dudit rotor (14).

4. Moteur de roue selon la revendication 3, **caractérisé en ce qu'**une couronne dentée (29) dudit premier moyen d'engrenage de réduction (23) est munie d'une roue libre (35) ; et une couronne dentée (34) dudit second moyen d'engrenage de réduction (24) est munie de moyens de décalage pour forcer la couronne dentée (34) à être fixée et à tourner au ralenti.

5. Moteur de roue selon la revendication 4, **caractérisé en ce que** lesdits moyens de décalage comprennent un embrayage à griffes (44) adapté pour s'engrener avec ladite couronne dentée (34), un curseur (45) destiné à déplacer l'embrayage à griffes (44) de manière réciproque dans des directions de l'arbre de sortie (13), et un arbre de décalage (49) destiné à entraîner le curseur (45).

6. Moteur de roue selon au moins une des revendications précédentes 1 à 5, **caractérisé en ce que** ledit stator (15) est muni d'un collecteur de courant (36) faisant saillie dans la direction axiale.

7. Moteur de roue selon la revendication 6, **caractérisé en ce que** ledit premier moyen d'engrenage de réduction (24) est muni de manière radiale vers l'intérieur dudit collecteur de courant (36).

8. Moteur de roue selon au moins une des revendications précédentes 1 à 7, **caractérisé par** un dispositif de freinage, dans lequel un tambour de frein (66) ou un disque de frein est fixé à une extrémité de l'arbre de sortie (13) à l'opposé de ladite roue (8).

9. Moteur de roue selon au moins une des revendications précédentes 1 à 8, **caractérisé par** un agencement d'onduleur comprenant un capot de moteur (19) destiné à couvrir le rotor (14), le stator (15) et un onduleur de contrôle de puissance (59) muni d'éléments de commutation (61) montés sur un substrat (60), dans lequel ledit capot de moteur (19) comprend une partie de support d'arbre (19a) destinée à supporter ledit arbre de sortie (13), une partie de disque (19b) attenante à la partie de support d'arbre (19a) et perpendiculaire audit arbre de sortie (13) et une partie de cylindre (19d) attenante à la partie de disque (19b), et dans lequel le substrat (60) est disposé dans une zone entourant la partie de support d'arbre (19a) dudit capot de moteur (19) .

10. Moteur de roue selon la revendication 9, **caractérisé en ce que** ledit substrat (60) est relié à la partie de disque (19b) dudit capot de moteur (19).

11. Moteur de roue selon la revendication 9 ou 10, **caractérisé par** des ailettes de refroidissement (42) formées sur la roue (8) au niveau de positions correspondant audit substrat (60) destinées à introduire de l'air de refroidissement dans un espace à l'intérieur de la roue (8) au moyen de la rotation de la roue (8).

12. Moteur de roue selon au moins une des revendications précédentes 9 à 11, **caractérisé en ce que** ledit capot de moteur (19) est muni d'une partie conique (19c) entre ladite partie de disque (19b) et ladite partie de cylindre (19d).

13. Moteur de roue selon au moins une des revendications précédentes 9 à 12, **caractérisé en ce qu'**un moteur de roue de type à bain d'huile est formé par ledit capot de moteur (19).

14. Moteur de roue selon la revendication 13, **caractérisé en ce que** ledit substrat (60) est relié à la partie de disque (19b) au niveau du côté inférieur dudit capot de moteur (19) et / ou **en ce que** sont disposés vers le haut dudit substrat (60) des condensateurs électrolytiques, des câbles de fil électrique (63) et un capteur électrique (64) connecté à l'onduleur de contrôle de puissance électrique (59) et / ou en qu'il est fourni au niveau de la partie supérieure dudit capot de moteur (19) des trous débouchants (a à f) pour lesdits câbles de fil électrique (63a à 63f).
